(19) Europäisches Patentamt
European Patent Office
Office européen des brevets

(11) Publication number: **0 294 129 B1**

(12) **EUROPEAN PATENT SPECIFICATION**

(45) Date of publication of patent specification: **06.04.94**

(51) Int. Cl.$^5$: **C08L 79/08**, //(C08L79/08, 79:08,81:02,81:06)

(21) Application number: **88304902.5**

(22) Date of filing: **27.05.88**

The file contains technical information submitted after the application was filed and not included in this specification

# (54) Polyimide resin composition.

(30) Priority: **01.06.87 JP 134830/87**
**01.06.87 JP 134831/87**
**03.06.87 JP 138203/87**
**03.06.87 JP 138204/87**
**25.12.87 JP 327206/87**

(43) Date of publication of application:
**07.12.88 Bulletin 88/49**

(45) Publication of the grant of the patent:
**06.04.94 Bulletin 94/14**

(84) Designated Contracting States:
**CH DE FR GB IT LI NL**

(56) References cited:
**EP-A- 0 235 294**
**EP-A- 0 292 243**
**WO-A-83/03417**
**US-A- 4 455 410**

(73) Proprietor: **MITSUI TOATSU CHEMICALS, Inc.**
**2-5 Kasumigaseki 3-chome**
**Chiyoda-Ku Tokyo 100(JP)**

(72) Inventor: **Ohta, Masahiro**
**1541, Yabe-cho**
**Totsuka-ku**
**Yokohama-shi Kanagagawa-ken(JP)**
Inventor: **Kawashima, Saburo**
**4-37-14, Ooyabe**
**Yokosuka-shi Kanagagawa-ken(JP)**
Inventor: **Iiyama, Katsuaki**
**58-2-3, Kamonomiya**
**Odawara-shi Kanagagawa-ken(JP)**
Inventor: **Tamai, Shoji**
**2882, Iijima-cho**
**Sakae-ku**
**Yokohama-shi Kanagawa-ken(JP)**
Inventor: **Oikawa, Hideaki**
**2070, Iijima-cho**
**Sakae-ku**
**Yokohama-shi Kanagawa-ken(JP)**
Inventor: **Yamaguchi, Akihiro**
**1-13-24, Zaimokuza**
**Kamakura-shi Kanagawa-ken(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 294 129 B1

Rank Xerox (UK) Business Services
(3.10/3.09/3.3.3)

(74) Representative: **Hayward, Denis Edward Peter et al**
**Lloyd Wise, Tregear & Co.**
**Norman House**
**105-109 Strand**
**London WC2R 0AE (GB)**

## Description

The present invention relates to a moulding resin composition, and more particularly relates to a moulding resin composition of polyimide which is excellent in high-temperatue stability, chemical resistance and mechanical strength as well as processing ability in moulding.

Polyimides have so far been excellent in mechanical strength and dimensional stability in addition to high-temperature resistance. Besides they also have flame retardance and electrical insulation properties. Therefore polyimides have been used in the field of electrical and electronic parts, aeronautics and space instruments and transport machinery, and are also expected to be put to wide use in future in the field where high temperature resistance is required.

Many kinds of polyimide which exhibit outstanding properties have been developed to date. Some types of polyimide, however, have excellent high-temperature resistance but they have no definite glass transition temperature and require a sinter moulding method for processing them.

On the other hand, other types of polyimide have excellent processing ability but they have now glass transition temperatures and are soluble in halogenated hydrocarbons. They are unsatisfactory from the viewpoint of high temperature stability and solvent resistance. Thus there are both merits and drawbacks in their properties.

Accordingly a polyimide has been desired which is excellent in high-temperature stability and solvent resistance and which also has outstanding processing ability as a moulding material.

A polyimide which satisfies the above-mentioned properties is essentially composed of recurring units of the formula:

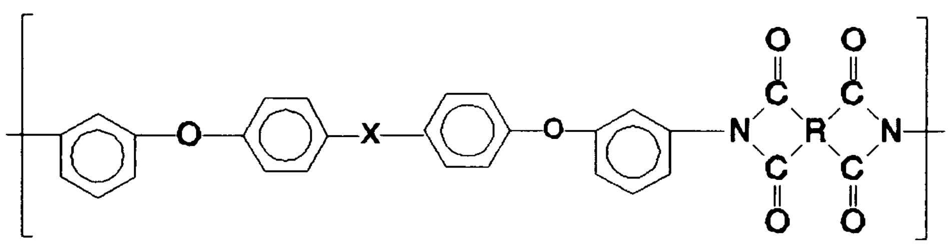

wherein X is a direct bond, a thio radical or a phenylene dicarbonyl radical where the two carbonyl radicals are located at the meta or para positions, and R is a tetravalent radical selected from aliphatic radicals having 2 or more carbon atoms, alicyclic radicals, monocyclic aromatic radicals, fused polycyclic aromatic radicals, and polycyclic aromatic radicals wherein the aromatic rings are linked to one another either by a direct bond or via a bridging group (Japanese Laid-Oopen Patents Nos. TOKKAISHO 61-143478, 62-68817, 62-86021 and 62-50372).

The above polyimide is a thermoplastic polyimide having flowability at high temperatures in addition to excellent mechanical, thermal and electrical properties which are significant in polyimides.

In comparison with ordinary conventional engineering polymers represented by polyethylene terephthalate, polybutylene terephthalate, polysulfone and polyphenylene sulfide, the above polyimide is much superior to these polymers in high-temperature resistance and that of other properties. On the other hand, the processing ability of the above polyimide is still inferior to these conventional polymers.

Generally in injection moulding or extrusion moulding, lower melt viscosity leads to better processing ability. For example, higher melt viscosity requires higher injection pressure in the moulding stage and the moulded products are subject to excessive stress, thereby lowering operation efficiency and causing an adverse effect on the properties of the moulded products. The above stated polyimide can be injection moulded because it has an excellent flowability at high temepratures. A further improvement is nevertheless required to enhance its workability.

WO-A-83/03417 suggests a composition obtained by blending a polyetherimide and a polysulphide, whilst US Patent 4,455,410 suggests a composition obtained by blending a polyetherimide and a polysulphate. However, such compositions do not provide the further improvement required.

An object of this invention is therefore to provide a moulding resin composition containing a polyimide, which composition has even better melt flowability without adverse effect on the desirable properties of the polyimide.

According to the invention there is provided a polyimide resin composition consisting of as a first component 99.9 to 50% by weight of a polyimide which consists essentially of recurring units of the formula:

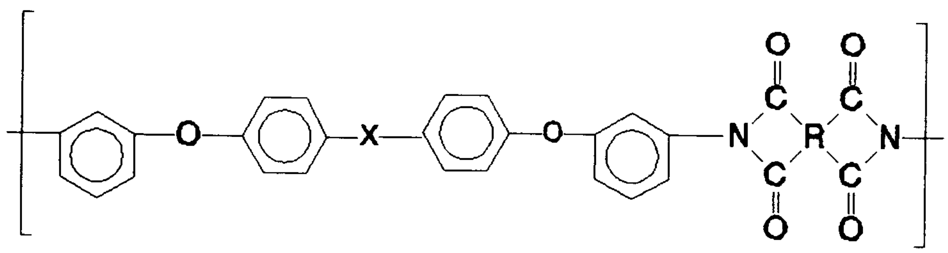

in which X is a direct bond, a thio radical or a phenylene dicarbonyl radical where the two carbonyl radicals are located at the meta or para positions, and R is a tetravalent radical selected from aliphatic radicals having 2 or more carbon atoms, alicyclic radicals, monocyclic aromatic radicals, fused polycyclic aromatic radicals, and polycyclic aromatic radicals wherein the aromatic rings are linked to one another either by a direct bond or via a bridging group,
and as a second component 0.1 to 50% by weight of a high-temperature engineering polymer selected from polyphenylene sulphide, aromatic polysulphones and aromatic polyetherimides different from the said first component, with the proviso that when the high temperature engineering polymer is an aromatic polyetherimide then X in the first component cannot be a direct bond or a thio radical, the above percentages being based on the total weight of the two components or taken together optionally with one or more solid lubricants, reinforcing material and/or common additives.

The polyimide used in the method of this invention is derived from an etherdiamine of the following formula:

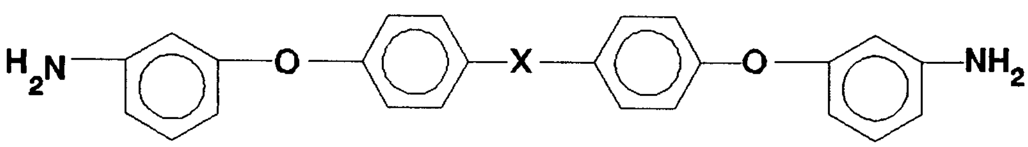

The etherdiamine is 4,4'-bis(3-aminophenoxy)biphenyl, bis{4-(3-aminophenoxy)phenyl] sulfide, 1,3-bis-[4-(3-aminophenoxy)benzoyl]benzene or 1,4-bis[4-(3-aminophenoxy)benzoyl]benzene.

These etherdiamines have the following formulae, respectively:

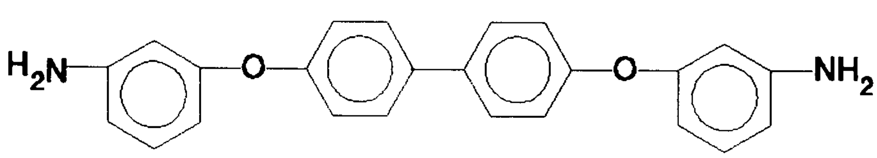

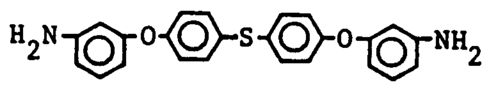

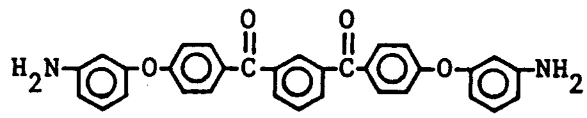

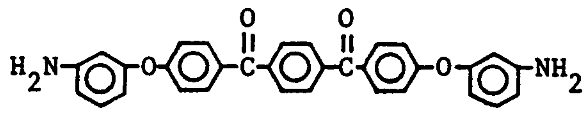

The etherdiamine is reacted with at least one of tetracarboxylic acid dianhydride in an organic solvent.

The tetracarboxylic acid dianhydride used in the above reaction is an anhydride of the formula:

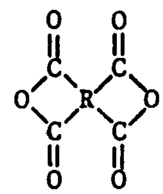

where R is the same as above.

The tetracarboxylic acid dianhydride used in the method includes, for example, ethylenetetracarboxylic dianhydride, butanetetracarboxylic dianhydride, cyclopentanetetracarboxylic dianhydride, pyromellitic dianhydride,
3,3′,4,4′-benzophenonetetracarboxylic dianhydride,
2,2′,3,3′-benzophenonetetracarboxylic dianhydride,
3,3′,4,4′-biphenyltetracarboxylic dianhydride,
2,2′3,3′-biphenyltetracarboxylic dianhydride,
2,2-bis(3,4-dicarboxyphenyl)propane dianhydride,
2,2-bis(2,3-dicarboxyphenyl)propane dianhydride,
bis(3,4-dicarboxyphenyl) ether dianhydride, bis(3,4-dicarboxyphenyl) sulfone dianhydride, 1,1-bis-(2,3-dicarboxyphenyl)ethane dianhydride,
bis(2,3-dicarboxyphenyl)methane dianhydride,
bis(3,4-dicarboxyphenyl)methane dianhydride,
4,4′-(p-phenylenedioxy)diphthalic dianhydride,
4,4′-(m-phenylenedioxy)diphthalic dianhydride,
2,3,6,7-naphthalenetetracarboxylic dianhydride,
1,4,5,8-naphthalenetetracarboxylic dianhydride,
1,2,5,6-naphthalenetetracarboxylic dianhydride,
1,2,3,4-benzenetetracarboxylic dianhydride,
3,4,9,10-perylenetetracarboxylic dianhydride,
2,3,6,7-anthracenetetracarboxylic dianhydride and
1,2,7,8-phenanthrenetetracarboxylic dianhydride.

Particularly preferred tetracarboxylic acid dianhydrides are pyromellitic dianhydride, 3,3′,4,4′-biphenyltetracarboxylicdianhydride, 3,3′,4,4′-benzophenonetetracarboxylic dianhydride and bis(3,4-dicarboxyphenyl) ether.

The tetracarboxylic acid dianhydride can be used alone or in mixtures of two or more.

Polyimide which is used in the composition of this invention is prepared by using above stated etherdiamine as a raw material. In order to obtain the composition of this invention, other diamine can also be used in combination with etherdiamine within the range which has no adverse effect on the good properties of polyimide.

Examples of diamines which may be used in admixture with etherdiamine include, m-phenylenediamine, o-phenylenediamine, p-phenylenediamine, m-aminobenzylamine, p-aminobenzylamine,

bis(3-aminophenyl) ether, (3-aminophenyl) (4-aminophenyl) ether,
bis(4-aminophenyl) ether, bis(3-aminophenyl) sulfide, (3-aminophenyl) (4-aminophenyl) sulfide, bis(4-aminophenyl) sulfide,
bis(3-aminophenyl) sulfoxide, (3-aminophenyl) (4-aminophenyl) sulfoxide,
bis(4-aminophenyl) sulfoxide, bis(3-aminophenyl) sulfone, (3-aminophenyl) (4-aminophenyl) sulfone, bis(4-aminophenyl) sulfone,
3,3′-diaminobenzophenone, 3,4′-diaminobenzophenone,
4,4′-diaminobenzophenone, bis[4-(4-aminophenoxy)phenyl]methane,
1,1-bis[4-(4-aminophenoxy)phenyl]ethane,
1,2-bis[4-(4-aminophenoxy)phenyl]ethane,
2,2-bis(4-(4-aminophenoxy)phenyl]propane,
2,2-bis[4-(4-aminophenoxy)phenyl]butane,
2,2-bis[4-(4-aminophenoxy)phenyl-1,1,1,3,3,3-hexafluoropropane,
1,3-bis(3-aminophenoxy)benzene, 1,3-bis(4-aminophenoxy)benzene,
1,4-bis(3-aminophenoxy)benzene, 1,4,-bis(4-aminophenoxy)benzene,
4,4′-bis(4-aminophenoxy)biphenyl,
bis[4-(4-aminophenoxy)phenyl] ketone,
bis[4-(4-aminophenoxy)phenyl] sulfide,
bis[4-(4-aminophenoxy)phenyl] sulfoxide,
bis[4-(4-aminophenoxy)phenyl] sulfone and
bis[4-(4-aminophenoxy)phenyl] ether.

The high temperature engineering polymer which is used in the present invention includes, for example, polyphenylene sulfide, aromatic polysulfone and aromatic polyetherimide. However, aromatic polyetherimide is excluded when X is a direct bond or thio radical in the formula of polyimide used in this invention.

Polyphenylene sulfide is a resin consisting of recurring units of the formula:

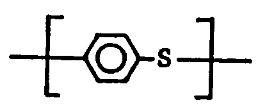

The preparation process of the resin is disclosed, for example, in U.S. Pat. 3,354,129 and Japanese Patent Publication TOKKOSHO 45-3368 (1970). The resin can be commercially available, for example, as RYTON (Trade Mark of Phillips Petroleum Co. in U.S.A.). According to the patent disclosure, polyphenylene sulfide is produced by reacting p-chlorobenzene with sodium sulfide monohydrate at 160-250 °C under pressure in N-methylpyrrolidone solvent. Polyphenylene sulfide includes various grades such as from non-crosslinked to partially crosslinked polymers and polymers having different polymerization degree. These grades can be easily produced by conducting a post-treatment process and also available in the market. Therefore grades having suitable melt viscosity for the desired polymer blend can be optionally prepared in the firm or purchased from the market.

Aromatic polysulfone is a well known high temperature engineering polymer having a polymer chain represented by the formula;

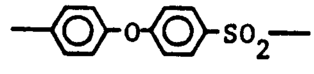

and described, for example, by V.J. Leslie et al, in CHEMITECH, July 1975, 426-432.

Representative examples of recurring units constituting aromatic polysulfone of this invention include:

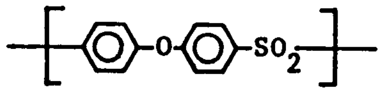

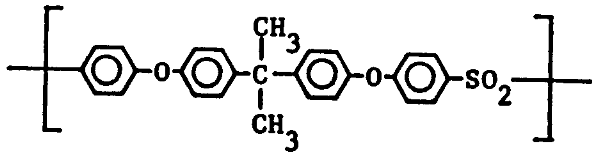

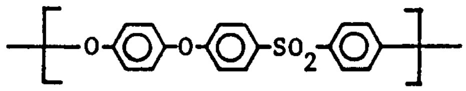

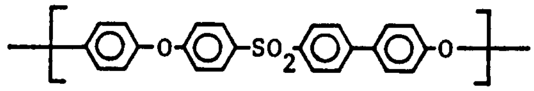

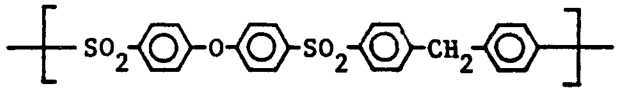

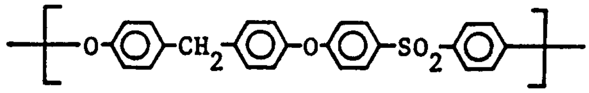

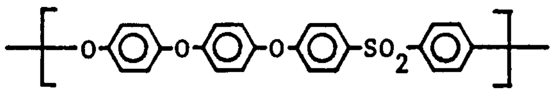

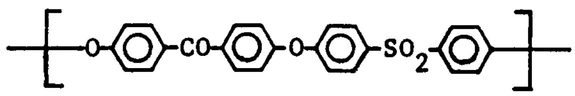

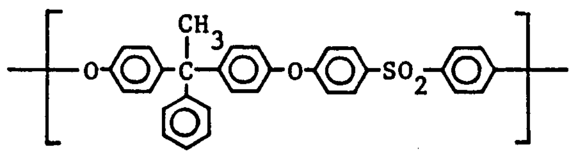

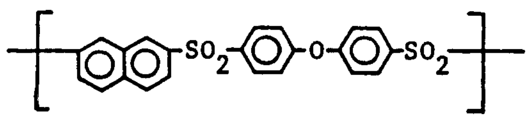

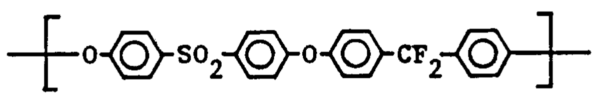

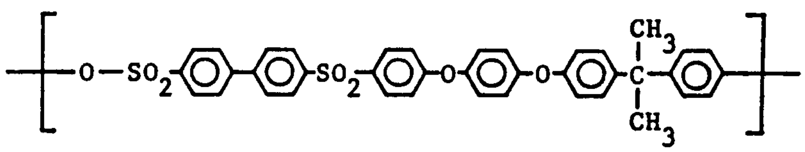

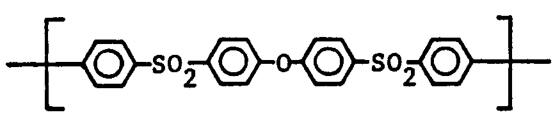

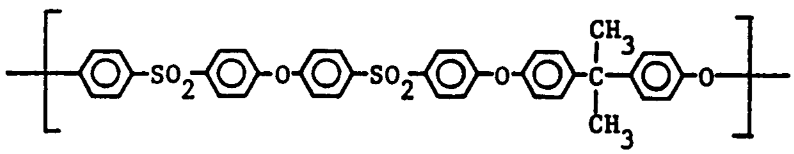

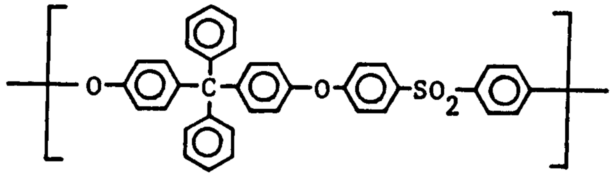

Particularly typical aromatic polysulfone include, for example, polysulfone consisting of recurring units represented by the formula:

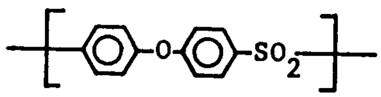

(Trade Mark; VICTREX PES, commerically available from Imperial Chemical Industries in Britain) and polysulfone consisting of recurring units represented by the formula:

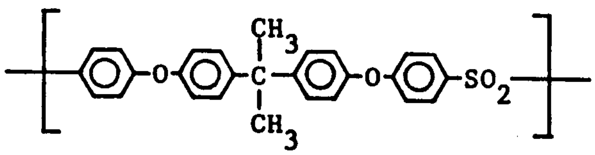

(Trade Mark; UDEL POLYSULFONE, commercially available from Union Carkide Corp. in U.S.A.).

Grades of aromatic polysulfone having various polymerization degrees can be easily produced. Therefore grades having suitable melt viscosity for the desired polymer blend can be optionally selected.

Aromatic polyetherimide is a polymer consisting of both ether and imide linkages as a required bonding unit and is substantially composed of recurring units of the following formula:

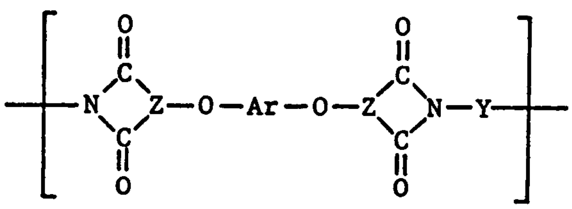

wherein Z is a trivalent aromatic radical where two valences out of three are connected with two adjacent carbon atoms, and Ar and Y are respectively a divalent monoaromatic radical and a divalent non-condensed polyaromatic radical connected with a bridge member.

This polyetherimide is also a well known high temperature engineering polymer and is described, for example, by Takekoshi et al. in Polymer Preprint 24,(2),312-313 (1983).

Suitable examples of recurring units constituting aromatic polyetherimide of this invention include:

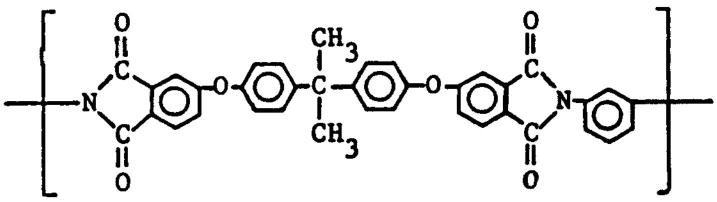

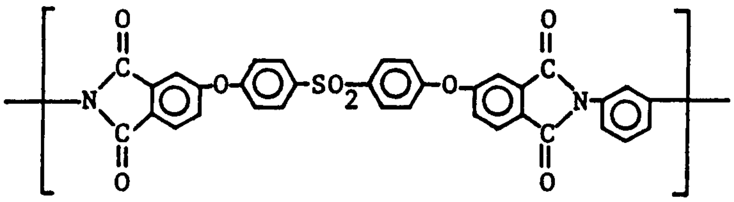

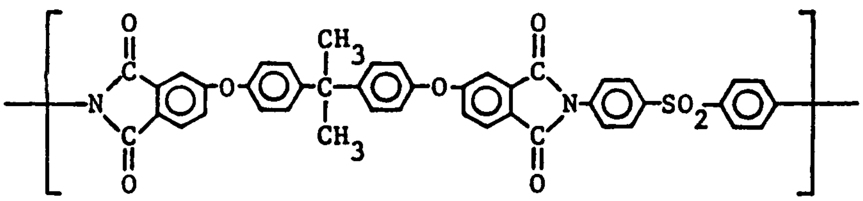

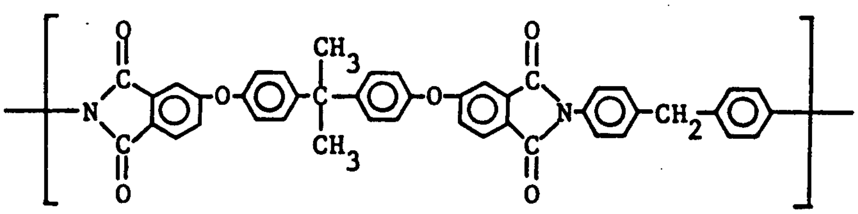

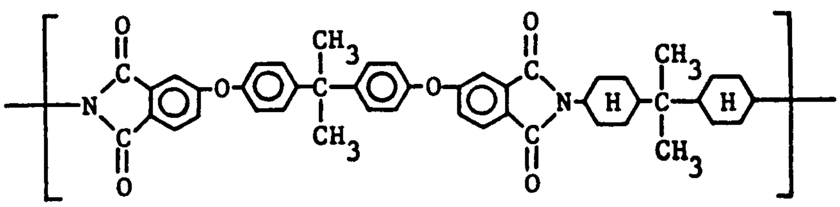

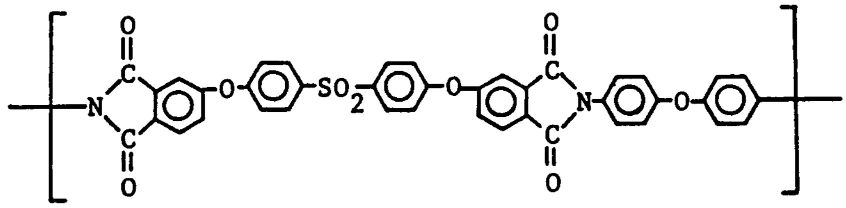

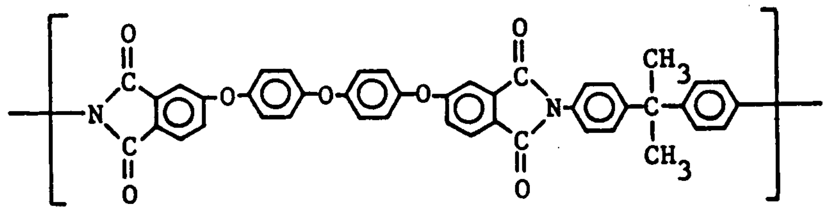

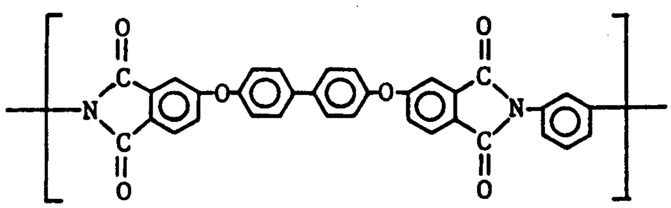

Aromatic polyetherimide is commercially available from General Electric Co. in U.S.A. with the Trade Mark of ULTEM-1000, ULTEM-4000 and ULTEM-6000.

Aromatic polyetherimide particularly consisting of recurring units of the formula:

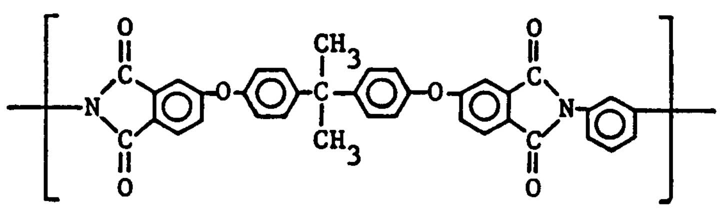

is commercially available from General Electric Co. with the Trade Mark of ULTEM-1000.

Grades of aromatic polyetherimide having various polymerization degrees can be easily produced. Therefore grades having suitable melt viscosity for the desired polymer blend can be optionally selected.

The molding composition of resin in this invention is prepared so as to consist of above mentioned polyimide in the range of 99.9 to 50% by weight and high-temperature engineering polymer in the range of 0.1 to 50% by weight.

The resin of this invention based on polyimide/polyphenylene sulfide exhibits remarkably low melt viscosity in a high temperature region above 350°C. The good fluidization effect of polyphenylene sulfide can be found even in a small amount. The lower limit of amount in the composition is 0.1% by weight. Preferred amount is not less than 0.5% by weight.

Polyphenylene sulfide is very excellent in chemical resistance, water absorption and flame retardance among the high-temperature stable resins. It, however, is inferior particularly in elongation at break and impact resistance. Therefore too much amount of polyphenylene sulfide in the above composition is unfavorable because the essential mechanical strength of polyimide can not be maintained. The amount of polyphenylene sulfide in the composition has an upper limit and is preferably 50% by weight or less.

Besides the resin of this invention based on polyimide/aromatic polysulfone exhibits remarkably low melt viscosity in a high temperature region such as above 350°C. The good fluidization effect of aromatic polysulfone can be found even in a small amount. The lower limit of amount in the composition is 0.1% by weight. Preferred amount is not less than 0.5% by weight.

Aromatic polysulfone is very excellent in mechanical strength at high temperatures among the high-temperature stable resins. It, however, is inferior to polyimide in mechanical strength, izod impact strength in particular. Therefore too much amount of aromatic polysulfone in the above composition is unfavorable because the essential mechanical strength of polyimide cannot be maintained. The amount of aromatic polysulfone in the composition has an upper limit and is preferably 50% by weight or less.

Besides the resin of this invention based on polyimide/aromatic polyetherimide exhibits remarkably low melt viscosity as compared with polyimide alone in a high temperature region, above 350 °C in particular. The effect can be found even in a small amount of aromatic polyetherimide. The lower limit of amount in the composition is 0.1% by weight. Preferred amount is not less than 0.5% by weight.

Aromatic polyetherimide is excellent in mechanical strength at high temperatures among the high-temperature stable resins. It, however, is inferior to polyimide in mechanical strength, izod impact strength in particular. Therefore too much amount of aromatic polyetherimide is unfavorable because the essential mechanical strength of polyimide cannot be maintained.

Aromatic polyetherimide is easily soluble in halogenated hydrocarbons such as methylene chloride and chloroform as well as amide type solvents such as dimethyl acetamide and N-methylpyrrolidone. Therefore too much amount of aromatic polyetherimide in the composition is unfavorable because the essential solvent resistance of polyimide cannot be maintained.

For these reasons, the amount of aromatic polytherimide has an upper limit in the composition and is preferably 50% by weight or less.

In the preparation of the composition in this invention, common methods known can be employed and, for example, below described methods are preferred.

(1) Polyimide powder and high-temperature engineering polymer powder are pre-mixed to prepare a uniform mixture of powder by using a blender such as a mortar, Henshel mixer, drum blender, tumbler blender, ball mill and ribbon blender.

(2) Polyimide powder is previously dissolved or suspended in an organic solvent. High-temperature engineering polymer is added to the resulting solution or suspension and dispersed uniformly, followed by removing the solvent to give powdered mixture.

(3) High-temperature engineering polymer is suspended in an organic solvent solution of polyamic acid which is the precursor of polyimide in this invention. The resultant suspension is imidized by heat treatment at 100-400 °C or by chemical imidization with an usual imidizing agent, followed by removing the solvent to give powdered mixture.

The powdered resin composition of polyimide thus obtained can be used as it is for various molding applications such as injection molding, compression molding, transfer molding and extrusion molding. A more preferred method is blending or fused resin prior to molding.

Fusion blending of polyimide and high-temperature engineering polymer in the forms of respectively powder and powder, pellet and pellet, or powder and pellet is also a simple and effective method.

Fusion blending can be carried out by using fusion blending equipment for usual rubber and plastics, for example, hot rolls, Banbury mixer, Brabender and extruder. The fusion temperature is set above the fusible temperature of the formulated system and below the initiation temperature of its decomposition. The temperature for blending polyimide with polyphenylene sulfide is normally in the range of 300-420 °C and preferable in the range of 320-400 °C. The blending of polyimide with aromatic polysulfone or aromatic polyetherimide is carried out normally in the range of 280-420 °C and preferably in the range of 300-400 °C.

As to the molding method of resin composition in this invention, injection and extrusion moldings are suitable because these methods form an uniform blend of fused polymers and have a high productivity. Other processing methods such as transfer molding, compression molding and sinter molding may also be applied.

In addition, the resin composition of this invention may be added with at least one of solid lubricants such as molybdenum disulfide, graphite, boron nitride, lead monoxide and lead powder. The composition may also be added with at least one of reinforcing materials such as glass fiber, carbon fiber, aromatic polyamide fiber, potassium titanate fiber and glass beads.

The resin composition of this invention may be added with at least one of commonly used additives within the range which has no adverse effect on the object of this invention. Such additives include, for example, antioxidants, heat stabilizers, ultraviolet ray absorbers, flame retardants, auxiliary flame retardants, antistatic agents, lubricating and coloring agents.

## EXAMPLES

The present invention will hereinafter be illustrated further in detail by way of synthesis examples, examples and comparative examples.

### Synthesis example 1

A reaction vessel equipped with a stirrer, reflux condenser and nitrogen inlet tube was charged with 4.0 kg (10 moles) of bis[4-(3-aminophenoxy)phenyl] sulfide and 34.8 kg of N,N-dimethylacetamide. The mixture was added with 2.14 kg (9.8 moles) of pyromellitic dianhydride by portions in a nitrogen atmosphere at the room temperature with taking care of temperature rise of the solution and stirred for 20 hours at the room temperature.

To the resultant polyamic acid solution, 2.02 kg (20 moles) of triethylamine and 2.55 kg (25 moles) of acetic anhydride were added dropwise in a nitrogen atmosphere at the room temperature and stirred for 20 hours at the room temperature to obtain a light yellow slurry. The slurry was filtered to obtain light yellow polyimide powder. The polyimide powder was sludged with methanol, filtered and dried at 180 °C for 8 hours under reduced pressure to obtain 5.63 kg (about 97.5% yield) of polyimide powder. The inherent viscosity of polyimide powder was 0.85 dl/g. The inherent viscosity was measured at 35 °C after dissolving 0.5 g of the polyimide powder in 100 ml of a solvent (a mixture of p-chlorophenol and phenol in a ratio of 90:10 by weight) at elevated temperatures and cooling the resulting solution.

### Synthesis examples 2-5

The same procedures as Synthesis example 1 were carried out. However, raw materials were changed as follows. Various diamines were used in place of [4-(3-aminophenoxy)phenyl] sulfide and various tetracarboxylic acid dianhydride were used in place of pyromellitic dianhydride. The amounts of diamines, N,N-dimethylacetamide and tetracarboxylic acid dianhydride were varied to obtain various polyimide powder. Table 1 illustrates conditions for the synthesis of polyimide resin.

Table 1

| Synthesis example | Diamine kg (mole) | N,N-dimethyl acetamide kg (mole) | Tetracarboxylic acid dianhydride kg (mole) | Inherent viscosity (dl/g) |
|---|---|---|---|---|
| 2 | 4,4'Bis(3-aminophenoxy)biphenyl 3.68 kg (10 moles) | 38.8 kg | 3,3',4,4'-Benzophenonetetracarboxylic dianhydride 3.16 kg (9.85 moles) | 0.62 |
| 3 | 4,4'-Bis(3-aminophenoxy)biphenyl 3.68 kg (10 moles) | 33 kg | Pyromellitic dianhydride 2.125 kg (9.75 moles) | 0.70 |
| 4 | Bis[4-(3-aminophenoxy)phenyl] sulfide 3.6 kg (9 moles)<br>Bis(4-aminophenyl) ether 0.202 kg (1 mole) | 33.7 kg | Pyromellitic dianhydride 2.11 kg (9.7 moles) | 0.78 |
| 5 | 4,4'-Bis(3-aminophenoxy)biphenyl 3.5 kg (9.5 moles)<br>Bis(4-aminophenyl) ether 0.101 kg (0.5 mole) | 32.3 kg | Pyromellitic dianhydride 2.10 kg (9.65 moles) | 0.72 |

Synthesis example 6

A reaction vessel equipped with a stirrer, reflux condenser and nitrogen inlet tube was charged with 5 kg (10 moles) of 1,3-bis[4-(3-aminophenoxy)benzoyl]benzene and 40.5 kg of N,N-dimethylacetamide. The

mixture was cooled to about 0 ° C and added with 2.147 kg (9.85 moles) of pyromellitic dianhydride by five portions in a nitrogen atmosphere with taking care of temperature rise of the solution. Then the temperature of the reaction mixture was raised to the room temperature and the mixture was stirred for 20 hours at the room temperature.

To the resultant polyamic acid solution, 2.02 kg (20 moles) of triethylamine and 2.55 kg (25 moles) of acetic anhydride were added dropwise in a nitrogen atmosphere at the room temperature and stirred for 20 hours at the room temperature to obtain a yellow slurry. The slurry was filtered to obtain light yellow polyimide powder. The polyimide powder was sludged with methanol, filtered and dried at 150 ° C for 8 hours under reduced pressure to obtain 6.6 kg (about 97.5% yield) of polyimide as light yellow powder. The glass transition temperature Tg of the powder was 235 ° C in accordance with DSC method.

Besides the inherent viscosity of the powder was 0.86 dl/g.

Synthesis examples 7-10

The same procedures as Synthesis example 6 were carried out by using various combinations of diamines and tetracarboxylic acid dianhydrides to obtain a variety of polyimide. Table 2 illustrates synthetic conditions, inherent viscosities and glass transition temperatures of the polyimide powder.

Table 2

| Synthesis example | Diamine kg (mole) | Tetracarboxylic acid dianhydride kg (mole) | Inherent viscosity (dl/g) | Tg (°C) |
|---|---|---|---|---|
| 7 | 1,3-bis[4-(3-aminophenoxy)benzoyl]benzene 4.75 kg (9.5 moles)<br>Bis(4-aminophenyl) ether 0.101 kg (0.5 mole) | 3,3',4,4'-Benzophenonetetracarboxylic dianhydride 3.16 kg (9.85 moles) | 0.82 | 227 |
| 8 | 1,4-Bis[4-(3-aminophenoxy)benzoyl]benzene 5.0 kg (10 moles) | 3,3',4,4'-Biphenyltetracarboxylic dianhydride 2.90 kg (9.85 moles) | 0.84 | 230 |
| 9 | 1,4-Bis[4-(3-aminophenoxy)benzoyl]benzene 2.5 kg (5 moles)<br>4,4'-Bis(3-aminophenoxy)biphenyl 1.84 kg (5 moles) | Pyromellitic dianhydride 2.14 kg (9.8 moles) | 0.80 | 248 |
| 10 | 1,4-Bis[4-(3-aminophenoxy)benzoyl]benzene 4.25 kg (8.5 moles)<br>Bis(4-aminophenyl) ether 0.303 kg (1.5 moles) | Bis(3,4-dicarboxyphenyl) ether dianhydride 3.038 kg (9.8 moles) | 0.78 | 220 |

Examples 1-4

The polyimide powder obtained in Synthesis example 1 was dry blended with polyphenylene sulfide powder RYTON P-4 (Trade Mark; a product of Phillips Petroleum Co.) in various compositions as illustrated

in Table 3. The mixtures was kneaded by fusing at 320-340 °C in an extruder having 40 mm aperture and a screw of 3.0/1 compression ratio, and extruded to obtain uniform pellets. The pellets thus obtained was injected molded at an injection temperature of 350-390 °C and a mold temperature of 150 °C. The physical and thermal properties of the molded product were measured and the results are illustrated in Table 3. In Table 3, tensile strength and elongation at break, flexural strength and flexural modulus, izod impact strength, and heat distortion temperature were respectively measured in accordance with ASTM D-638, D-790, D-256 and D-648.

Besides Table 3 also illustrates minimum injection pressure which indicates melt flowability. Lower minimum injection pressure results from lower melt flowability.

Comparative example 1

The same procedures as Examples 1-4 were carried out by using a composition outside the scope of this invention. The physical and thermal properties of molded specimens were measured and the results are illustrated in Table 3.

Table 3

| Example or Comparative example | Polyimide | | Polyphenylene sulfide RYTON P-4 | Minimum injection pressure | Tensil strength | Elongation | Flexural strength | Flexural modulus | Izod impact strength (notched) | Heat distortion temperature |
|---|---|---|---|---|---|---|---|---|---|---|
| | Synthesis example | (wt.parts) | (wt.parts) | ($kg/cm^2$) | ($kg/cm^2$) | (%) | ($kg/cm^2$) | ($kg/cm^2$) | (kg cm/cm) | (°C)(18.6 $kg/cm^2$) |
| Ex. 1 | 1 | 98 | 2 | 480 | 1,650 | 60 | 2,800 | 36,300 | 21.0 | 215 |
| Ex. 2 | 1 | 85 | 15 | 260 | 1,640 | 55 | 2,800 | 38,000 | 20.6 | 214 |
| Ex. 3 | 1 | 75 | 25 | 190 | 1,600 | 45 | 2,740 | 40,000 | 19.9 | 212 |
| Ex. 4 | 1 | 50 | 50 | * | 1,520 | 33 | 2,560 | 41,200 | 18.4 | 200 |
| Comp. 1 | 1 | 100 | 0 | 550 | 1,650 | 60 | 2,800 | 36,300 | 21.0 | 215 |

* Lower than detection limit of 40 $kg/cm^2$.

Examples 5-14 and Comparative examples 2-5

The procedures of Examples 1-4 were repeated by using the polyimide powder obtained in Synthesis examples 2-5 to give uniformly blended pellets. The pellets were injection molded. Physical and thermal

properties were measured on the molded specimens. The results on both within and outside the scope of this invention are illustrated in Tables 4-5 as Examples 5-14 and Comparative examples 2-5 respectively.

Table 4

| Example or Comparative example | Polyimide Synthesis example | Polyimide (wt.parts) | Polyphenylene sulfide RYTON P-4 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 5 | 2 | 95 | 5 | 420 | 1,350 | 39 | 1,800 | 36,500 | 15.7 | 210 |
| Ex. 6 | 2 | 75 | 25 | 160 | 1,340 | 38 | 1,800 | 39,800 | 15.6 | 209 |
| Ex. 7 | 2 | 50 | 50 | * | 1,270 | 35 | 1,740 | 41,100 | 15.0 | 208 |
| Comp. 2 | 2 | 100 | 0 | 580 | 1,350 | 40 | 1,800 | 36,000 | 16.0 | 210 |
| Ex. 8 | 3 | 95 | 5 | 560 | 1,150 | 100 | 1,530 | 34,000 | 18.0 | 233 |
| Ex. 9 | 3 | 75 | 25 | 230 | 1,100 | 85 | 1,500 | 38,600 | 17.8 | 228 |
| Ex. 10 | 3 | 50 | 50 | * | 990 | 60 | 1,500 | 41,200 | 16.2 | 216 |
| Comp. 3 | 3 | 100 | 0 | 650 | 1,150 | 100 | 1,530 | 32,400 | 18.3 | 235 |

* Lower than detection limit of 40 $kg/cm^2$.

Table 5

| Example or Comparative example | Polyimide Synthesis example | Polyimide (wt.parts) | Polyphenylene sulfide RYTON P-4 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 11 | 4 | 95 | 5 | 570 | 2,100 | 78 | 3,000 | 36,500 | 16.8 | 257 |
| Ex. 12 | 4 | 75 | 25 | 230 | 2,000 | 65 | 2,950 | 40,000 | 16 | 252 |
| Comp. 4 | 4 | 100 | 0 | 650 | 2,100 | 80 | 3,000 | 35,000 | 17.0 | 260 |
| Ex. 13 | 5 | 95 | 5 | 750 | 1,650 | 85 | 1,800 | 34,500 | 13.8 | 272 |
| Ex. 14 | 5 | 50 | 50 | 140 | 1,530 | 60 | 1,750 | 41,300 | 11.5 | 256 |
| Comp. 5 | 5 | 100 | 0 | 850 | 1,700 | 90 | 1,800 | 33,000 | 14.0 | 275 |

Examples 15-17

The polyimide powder obtained in Synthesis example 6 was dry blended with polyphenylene sulfide RYTON P-4 in various compositions as illustrated in Table 6. The mixture was pelletized by extruding at

270-310 °C with a twin screw extruder.

The pellets obtained were injection molded at the injection temperature of 280-320 °C and mold temperature of 150 °C. Physical and thermal properties of molded specimens were measured. Results are illustrated in Table 6.

Comparative example 6

The same procedures as Examples 1-3 were carried out by using a composition outside the scope of this invention. The physical and thermal properties of molded specimens were measured and the results are illustrated in Table 6.

Table 6

| Example or Comparative example | Polyimide Synthesis example | Polyimide (wt.parts) | Polyphenylene sulfide RYTON P-4 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 15 | 6 | 95 | 5 | 320 | 1,590 | 70 | 1,960 | 38,000 | 16.4 | 220 |
| Ex. 16 | 6 | 75 | 25 | 200 | 1,560 | 65 | 1,900 | 40,200 | 15.5 | 217 |
| Ex. 17 | 6 | 50 | 50 | * | 1,450 | 50 | 1,820 | 41,800 | 13.5 | 209 |
| Comp. 6 | 6 | 100 | 0 | 520 | 1,600 | 70 | 1,960 | 37,500 | 16.5 | 220 |

* Lower than detection limit of 40 $kg/cm^2$.

Examples 18-26 and Comparative examples 7-10

The procedures of Examples 15-17 were repeated by using the polyimide powder obtained in Synthesis examples 7-10 to give uniformly blended pellets. The pellets were injection molded. Physical and thermal

properties were measured on the molded specimens. The results on both within and outside the scope of this invention are illustrated in Table 7-8 as Examples 18-26 and Comparative examples 7-10 respectively.

Table 7

| Example or Comparative example | Polyimide | | Polyphenylene sulfide RYTON P-4 | Minimum injection pressure | Tensil strength | Elongation | Flexural strength | Flexural modulus | Izod impact strength (notched) | Heat distortion temperature (°C) |
|---|---|---|---|---|---|---|---|---|---|---|
| | Synthesis example | (wt.parts) | (wt.parts) | ($kg/cm^2$) | ($kg/cm^2$) | (%) | ($kg/cm^2$) | ($kg/cm^2$) | (kg cm/cm) | (18.6 $kg/cm^2$) |
| Ex. 18 | 7 | 95 | 5 | 340 | 1,850 | 68 | 1,980 | 38,000 | 15.5 | 204 |
| Ex. 19 | 7 | 50 | 50 | * | 1,770 | 62 | 1,930 | 41,800 | 13.0 | 195 |
| Comp. 7 | 7 | 100 | 0 | 560 | 1,850 | 68 | 1,980 | 38,000 | 15.5 | 204 |
| Ex. 20 | 8 | 95 | 5 | 300 | 1,390 | 60 | 1,700 | 35,800 | 12.3 | 210 |
| Ex. 21 | 8 | 50 | 50 | * | 1,300 | 50 | 1,650 | 41,400 | 10.5 | 198 |
| Comp. 8 | 8 | 100 | 0 | 510 | 1,400 | 60 | 1,700 | 34,500 | 12.5 | 210 |
| Ex. 22 | 9 | 90 | 10 | 360 | 1,490 | 83 | 1,750 | 36,100 | 17.0 | 231 |
| Ex. 23 | 9 | 50 | 50 | * | 1,400 | 60 | 1,690 | 41,000 | 13.5 | 222 |
| Comp. 9 | 9 | 100 | 0 | 620 | 1,500 | 85 | 1,750 | 35,200 | 17.5 | 231 |

* Lower than detection limit of 40 $kg/cm^2$.

Table 8

| Example or Comparative example | Polyimide Synthesis example | Polyimide (wt.parts) | Poly-phenylene sulfide RYTON P-4 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 24 | 10 | 95 | 5 | 360 | 1,350 | 64 | 1,460 | 31,400 | 11.5 | 201 |
| Ex. 25 | 10 | 85 | 15 | 240 | 1,340 | 62 | 1,460 | 34,000 | 11.0 | 199 |
| Ex. 26 | 10 | 75 | 25 | 150 | 1,330 | 59 | 1,440 | 36,000 | 10.0 | 195 |
| Comp. 10 | 10 | 100 | 0 | 580 | 1,350 | 65 | 1,460 | 30,000 | 11.5 | 201 |

Examples 27-30

The polyimide powder obtained in Synthesis example 1 was dry blended with aromatic polysulfone powder VICTREX PES 3600P (Trade Mark; a product of Imperial Chemical Industry) in various compositions as illustrated in Table 9. The mixture was kneaded by fusing at 330-360 °C in an extruder having 40 mm aperture and a screw of 3.0/1 compression ratio, and extruded to obtain uniform pellets. The pellets thus obtained was injection molded at an injection temperature of 360 °C and a mold temperature of 180 °C. The physical and thermal properties of the molded product were measured and the results are illustrated in Table 9.

In Table 9, glass transition temperature Tg which was measured in accordance with TMA penetration method is also illustrated.

Comparative example 11

The same procedures as Examples 27-30 were carried out by using a composition outside the scope of this invention. The physical and thermal properties of molded specimens were measured and the results are illustrated in Table 9.

Table 9

| Example or Comparative example | Polyimide: Synthesis example | Polyimide (wt.parts) | Aromatic Polysulfone VICTREX PES 3600P (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 27 | 1 | 95 | 5 | 500 | 1,650 | 60 | 2,800 | 36,300 | 21.0 | 215 | 235 |
| Ex. 28 | 1 | 85 | 15 | 450 | 1,650 | 60 | 2,800 | 36,300 | 21.0 | 215 | 235 |
| Ex. 29 | 1 | 75 | 25 | 380 | 1,600 | 60 | 2,750 | 36,000 | 20.2 | 213 | 234 |
| Ex. 30 | 1 | 50 | 50 | 320 | 1,480 | 60 | 2,550 | 34,500 | 19.0 | 211 | 231 |
| Comp. 11 | 1 | 100 | 0 | 550 | 1,650 | 60 | 2,800 | 36,300 | 21.0 | 215 | 235 |

Examples 31-33 and Comparative example 12

The polyimide powder obtained in Synthesis example 2 was dry blended with aromatic polysulfone VICTREX PES 3600P in the compositions illustrated in Table 12 and pelletized by the same procedures as Examples 27-30 at 320-360 °C. The pellets obtained were injection molded at 380 °C with a mold

temperature of 190 °C. Physical and thermal properties of molded specimens were measured. Results are illustrated in Table 10.

Table 10

| Example or Comparative example | Polyimide Synthesis example | Polyimide (wt.parts) | Aromatic Polysulfone VICTREX PES 3600P (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 31 | 2 | 95 | 5 | 465 | 1,350 | 40 | 1,800 | 36,000 | 16.0 | 210 | 235 |
| Ex. 32 | 2 | 75 | 25 | 395 | 1,300 | 45 | 1,800 | 35,000 | 15.0 | 207 | 233 |
| Ex. 33 | 2 | 50 | 50 | 335 | 1,200 | 50 | 1,750 | 33,500 | 13.5 | 205 | 230 |
| Comp. 12 | 2 | 100 | 0 | 580 | 1,350 | 40 | 1,800 | 36,000 | 16.0 | 210 | 235 |

Examples 34-36 and Comparative example 13

The polyimide powder obtained in Synthesis example was dry blended with aromatic polysulfone powder UDEL POLYSULFONE P-1700 (Trade Mark; a product of Union Carbide Corp.) in various compositions as illustrated in Table 11. The mixture was kneaded by fusing at 360-390 °C in an extruder having 40 mm aperture and a screw of 3.0/1 compression ratio, and extruded to obtain uniform pellets. The pellets thus obtained was injection molded at an injection temperature of 390 °C and a mold temperature of 190 °C. The physical and thermal properties of the molded product were measured and the results are illustrated in Table 11.

Table 11

| Example or Comparative example | Polyimide | | Aromatic Polysulfone UDEL POLYSULFONE P-1700 | Minimum injection pressure | Tensil strength | Elongation | Flexural strength | Flexural modulus | Izod impact strength (notched) | Heat distortion temperature (°C) | Tg |
|---|---|---|---|---|---|---|---|---|---|---|---|
| | Synthesis example | (wt.parts) | (wt.parts) | ($kg/cm^2$) | ($kg/cm^2$) | (%) | ($kg/cm^2$) | ($kg/cm^2$) | (kg cm/cm) | (18.6 $kg/cm^2$) | (°C) |
| Ex. 34 | 3 | 95 | 5 | 520 | 1,120 | 100 | 1,520 | 32,400 | 18.3 | 235 | 253 |
| Ex. 35 | 3 | 85 | 15 | 440 | 1,100 | 100 | 1,520 | 32,400 | 17.9 | 233 | 250 |
| Ex. 36 | 3 | 50 | 50 | 350 | 1,000 | 100 | 1,460 | 32,000 | 16.5 | 202 | 223 |
| Comp. 13 | 3 | 100 | 100 | 650 | 1,150 | 100 | 1,530 | 32,400 | 18.3 | 235 | 255 |

Examples 37-39 and Comparative example 14

The same procedures as Examples 27-30 were carried out to obtain uniformly blended pellets except that the polyimide powder obtained in Synthesis example 4 and UDEL POLYSULFONE P-1700 were treated at 370-390 °C.

The pellets obtained were injection molded at 390 °C with a mold temperature of 180 °C. Physical and thermal properties of molded specimens were measured. Results are illustrated in Table 12.

Table 12

| Example or Comparative example | Polyimide Synthesis example | Polyimide (wt.parts) | Aromatic Polysulfone UDEL POLYSULFONE P-1700 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 37 | 4 | 95 | 5 | 600 | 2,080 | 80 | 3,000 | 35,000 | 17.0 | 260 | 285 |
| Ex. 38 | 4 | 75 | 25 | 480 | 2,000 | 80 | 3,000 | 35,000 | 16.5 | 255 | 280 |
| Ex. 39 | 4 | 50 | 50 | 330 | 1,850 | 80 | 2,800 | 34,200 | 15.5 | 252 | 275 |
| Comp. 14 | 4 | 100 | 0 | 650 | 2,100 | 80 | 3,000 | 35,000 | 17.0 | 260 | 285 |

Examples 40-42 and Comparative example 15

The same procedures as Examples 27-30 were carried out to obtain uniformly blended pellets except that the polyimide powder obtained in Synthesis example 5 and aromatic polysulfone VICTREX PES 3600P were treated at 370-390 ° C.

The pellets obtained were injection molded at 390 ° C with a mold temperature of 180 ° C. Physical and thermal properties of molded specimens were measured. Results are illustrated in Table 13.

Table 13

| Example or Comparative example | Polyimide Synthesis example | Polyimide (wt.parts) | Aromatic Polysulfone VICTREX PES 3600P (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 40 | 5 | 95 | 5 | 800 | 1,700 | 90 | 1,800 | 33,000 | 14.0 | 274 | 293 |
| Ex. 41 | 5 | 75 | 25 | 600 | 1,660 | 90 | 1,780 | 33,000 | 12.0 | 270 | 289 |
| Ex. 42 | 5 | 50 | 50 | 450 | 1,580 | 90 | 1,700 | 31,000 | 10.0 | 261 | 282 |
| Comp. 15 | 5 | 100 | 0 | 850 | 1,700 | 90 | 1,800 | 33,000 | 14.0 | 275 | 295 |

Examples 43-45

The polyimide powder obtained in Synthesis example 6 was dry blended with aromatic polysulfone powder UDEL POLYSULFONE P-1700 in various compositions as illustrated in Table 14. The mixture was pelletized by extruding at 300-330 °C with a twin screw extruder.

The pellets obtained were injection molded at the cylinder temperature of 330-360 °C and mold temperature of 150 °C. Physical and thermal properties of molded specimens were measured. Results are illustrated in Table 14.

Comparative example 16

The sample procedures as Examples 43-45 were carried out by using a composition outside the scope of this invention. The physical and thermal properties of molded specimens were measured and the results are illustrated in Table 14.

Table 14

| Example or Comparative example | Polyimide: Synthesis example | Polyimide (wt.parts) | Aromatic Polysulfone UDEL POLYSULFONE P-1700 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 43 | 6 | 95 | 5 | 420 | 1,600 | 72 | 1,960 | 37,500 | 16.5 | 219 | 238 |
| Ex. 44 | 6 | 75 | 25 | 310 | 1,580 | 90 | 1,950 | 37,200 | 16.0 | 216 | 236 |
| Ex. 45 | 6 | 50 | 50 | 275 | 1,500 | 98 | 1,880 | 36,100 | 14.8 | 210 | 230 |
| Comp. 16 | 6 | 100 | 0 | 520 | 1,600 | 70 | 1,960 | 37,500 | 16.5 | 220 | 238 |

Examples 46-53 and Comparative examples 17-20

The polyimide powder obtained in Synthesis examples 7-10 was mixed with aromatic polysulfone. VICTREX PES 3600P and UDEL POLYSULFONE P-1700 are used as aromatic polysulfone. The resulting mixtures having compositions illustrated in Tables 15-17 were kneaded by fusing in an extruder to obtain

uniformly blended pellets.

The pellets above obtained were injection molded with the same conditions as Examples 43-45. The molded specimens were measured their physical and thermal properties. The results obtained are illustrated in Tables 15-17.

Table 15

| Example or Comparative example | Polyimide | | Aromatic Polysulfone UDEL POLYSULFONE P-1700 | Minimum injection pressure | Tensil strength | Elongation | Flexural strength | Flexural modulus | Izod impact strength (notched) | Heat distortion temperature (°C) | Tg |
|---|---|---|---|---|---|---|---|---|---|---|---|
| | Synthesis example | (wt.parts) | (wt.parts) | $(kg/cm^2)$ | $(kg/cm^2)$ | (%) | $(kg/cm^2)$ | $(kg/cm^2)$ | (kg cm/cm) | $(18.6\ kg/cm^2)$ | (°C) |
| Ex. 46 | 7 | 95 | 5 | 470 | 1,850 | 72 | 1,980 | 38,000 | 15.0 | 204 | 228 |
| Ex. 47 | 7 | 50 | 50 | 290 | 1,730 | 95 | 1,850 | 36,800 | 14.2 | 202 | 226 |
| Comp. 17 | 7 | 100 | 0 | 560 | 1,850 | 68 | 1,980 | 38,000 | 15.5 | 204 | 228 |

Table 16

| Example or Comparative example | Polyimide: Synthesis example | Polyimide: (wt.parts) | Aromatic Polysulfone VICTREX PES 3600P (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 48 | 8 | 90 | 10 | 410 | 1,390 | 61 | 1,700 | 34,300 | 12.5 | 210 | 230 |
| Ex. 49 | 8 | 50 | 50 | 300 | 1,370 | 64 | 1,650 | 33,500 | 11.5 | 207 | 228 |
| Comp. 18 | 8 | 100 | 0 | 510 | 1,400 | 60 | 1,700 | 34,500 | 12.5 | 210 | 230 |
| Ex. 50 | 9 | 95 | 5 | 480 | 1,500 | 85 | 1,740 | 35,200 | 17.0 | 231 | 250 |
| Ex. 51 | 9 | 50 | 50 | 310 | 1,420 | 80 | 1,710 | 34,100 | 16.0 | 227 | 247 |
| Comp. 19 | 9 | 100 | 0 | 620 | 1,500 | 85 | 1,750 | 35,200 | 17.5 | 231 | 250 |

Table 17

| Example or Comparative example | Polyimide: Synthesis example | Polyimide (wt.parts) | Aromatic Polysulfone UDEL POLYSULFONE P-1700 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) | Tg (°C) |
|---|---|---|---|---|---|---|---|---|---|---|---|
| Ex. 52 | 10 | 95 | 5 | 435 | 1,350 | 68 | 1,460 | 30,000 | 11.5 | 201 | 220 |
| Ex. 53 | 10 | 50 | 50 | 260 | 1,250 | 90 | 1,410 | 28,000 | 10.0 | 197 | 214 |
| Comp. 20 | 10 | 100 | 0 | 580 | 1,350 | 65 | 1,460 | 30,000 | 11.5 | 201 | 220 |

Examples 54-65

The polyimide powder obtained in Synthesis examples 6-10 was dry blended with the commercially available aromatic polyetherimide ULTEM 1000 (Trade Mark; a product of General Electric Co. in U.S.A.) in

various compositions as illustrated in Tables 18-20. The mixture was pelletized by extruding at 370-400 °C with a twin screw extruder.

The pellets obtained were injection molded at the cylinder temperature of 360-390 °C and mold temperature of 150 °C. Physical and thermal properties of molded specimens were measured. Results are illustrated in Tables 18-20.

Comparative examples 21-25

The same procedures as Examples 54-65 were carried out by using a composition outside the scope of this invention. The physical and thermal properties of molded specimens were measured and the results are illustrated in Tables 18-20.

Table 18

| Example or Comparative example | Polyimide Synthesis example | Polyimide (wt.parts) | Aromatic polyether-imide ULTEM-1000 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 54 | 6 | 95 | 5 | 510 | 1,580 | 70 | 1,950 | 37,300 | 16.2 | 219 |
| Ex. 55 | 6 | 85 | 15 | 480 | 1,560 | 68 | 1,930 | 37,100 | 15.7 | 218 |
| Ex. 56 | 6 | 75 | 25 | 455 | 1,530 | 67 | 1,900 | 36,800 | 15.0 | 217 |
| Ex. 57 | 6 | 50 | 50 | 410 | 1,430 | 65 | 1,800 | 36,100 | 12.7 | 212 |
| Comp. 21 | 6 | 100 | 0 | 520 | 1,600 | 70 | 1,960 | 37,500 | 16.5 | 220 |

Table 19

| Example or Comparative example | Polyimide Synthesis example | Polyimide (wt.parts) | Aromatic polyetherimide ULTEM-1000 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 58 | 7 | 90 | 10 | 510 | 1,810 | 67 | 1,960 | 37,700 | 15.0 | 203 |
| Ex. 59 | 7 | 50 | 50 | 415 | 1,600 | 63 | 1,820 | 36,500 | 12.0 | 201 |
| Comp. 22 | 7 | 100 | 0 | 560 | 1,850 | 68 | 1,980 | 38,000 | 15.5 | 204 |
| Ex. 60 | 8 | 70 | 30 | 435 | 1,350 | 60 | 1,670 | 34,300 | 11.0 | 208 |
| Ex. 61 | 8 | 50 | 50 | 405 | 1,300 | 60 | 1,630 | 34,000 | 9.5 | 206 |
| Comp. 23 | 8 | 100 | 0 | 510 | 1,400 | 60 | 1,700 | 34,500 | 12.5 | 210 |

Table 20

| Example or Comparative example | Polyimide: Synthesis example | Polyimide (wt.parts) | Aromatic polyether-imide ULTEM-1000 (wt.parts) | Minimum injection pressure ($kg/cm^2$) | Tensil strength ($kg/cm^2$) | Elongation (%) | Flexural strength ($kg/cm^2$) | Flexural modulus ($kg/cm^2$) | Izod impact strength (notched) (kg cm/cm) | Heat distortion temperature (°C) (18.6 $kg/cm^2$) |
|---|---|---|---|---|---|---|---|---|---|---|
| Ex. 62 | 9 | 95 | 5 | 570 | 1,490 | 84 | 1,750 | 35,200 | 17.2 | 231 |
| Ex. 63 | 9 | 75 | 25 | 505 | 1,450 | 82 | 1,710 | 35,000 | 16.0 | 226 |
| Comp. 24 | 9 | 100 | 0 | 620 | 1,500 | 85 | 1,750 | 35,200 | 17.5 | 231 |
| Ex. 64 | 10 | 75 | 25 | 465 | 1,310 | 64 | 1,470 | 30,600 | 10.3 | 200 |
| Ex. 65 | 10 | 50 | 50 | 415 | 1,270 | 62 | 1,470 | 31,400 | 9.0 | 200 |
| Comp. 25 | 10 | 100 | 0 | 580 | 1,350 | 65 | 1,460 | 30,000 | 11.5 | 201 |

The present invention can provide the polyimide base resin composition with a very good processing ability in addition to essentially excellent characteristics of polyimide.

## Claims

1. A polyimide resin composition consisting of as a first component 99.9 to 50% by weight of a polyimide which consists essentially of recurring units of the formula:

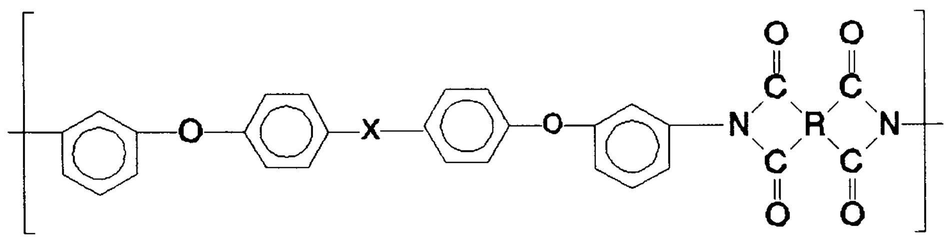

in which X is a direct bond, a thio radical or a phenylene dicarbonyl radical where the two carbonyl radicals are located at the meta or para positions, and R is a tetravalent radical selected from aliphatic radicals having 2 or more carbon atoms, alicyclic radicals, monocyclic aromatic radicals, fused polycyclic aromatic radicals, and polycyclic aromatic radicals wherein the aromatic rings are linked to one another either by a direct bond or via a bridging group,
and as a second component 0.1 to 50% by weight of a high-temperature engineering polymer selected from polyphenylene sulphide, aromatic polysulphones and aromatic polyetherimides different from the said first component, with the proviso that when the high temperature engineering polymer is an aromatic polyetherimide then X in the first component cannot be a direct bond or a thio radical, the above percentages being based on the total weight of the two components or taken together optionally with one or more solid lubricants, reinforcing material and/or common additives.

2. A polyimide resin composition as claimed in Claim 1 in which R is:

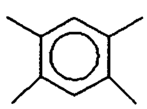 , 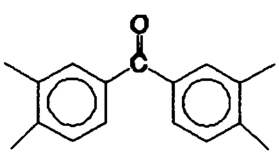 , 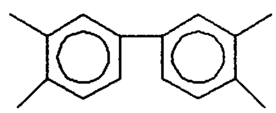 or 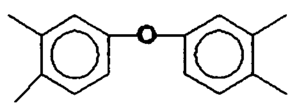

3. A polyimide resin composition as claimed in Claim 1 or Claim 2 in which the high-temperature engineering polymer is polyphenylene sulphide.

4. A polyimide resin composition as claimed in Claim 1 or Claim 2 in which the high-temperature engineering polymer is an aromatic polysulphone.

5. A polyimide resin composition as claimed in Claim 1 or Claim 2 in which the high-temperature engineering polymer is an aromatic polyetherimide different from the said first component.

## Patentansprüche

1. Zusammensetzung aus Polyimidharz, die aus 99,9-50 Gewichtprozent eines im wesentlichen aus rekurrenten Einheiten bestehenden Polyimides mit der Formel:

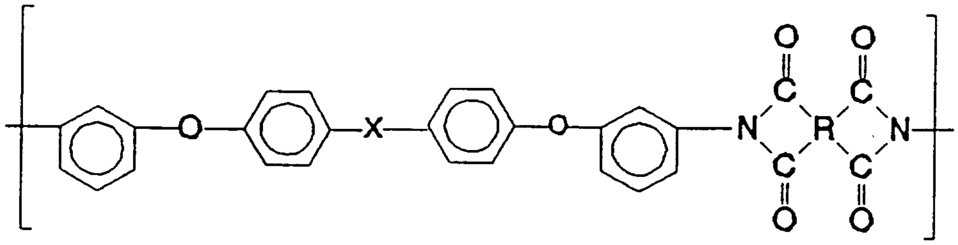

als erster Komponente besteht, wobei X eine direkte Bindung, ein Thio-Radikal oder ein Phenylendicarbonyl-Radikal ist, bei dem sich die zwei Carbonyl-Radikale in Meta- oder Parastellungen befinden, und R ein tetravalentes Radikal ist, das aus aliphatischen Radikalen mit 2 oder mehr Kohlenstoffatomen, alizyklischen Radikalen, monozyklischen aromatischen Radikalen, kondensierten, polyzyklischen aromatischen Radikalen und polyzyklischen aromatischen Radikalen ausgewählt wird, wobei die Benzolringe direkt oder über eine Brückengruppe miteinander verbunden sind, und aus 0,1-50 Gewichtprozent eines technischen Hochtemperaturpolymers als zweite Komponente, die aus Polyphenylensulfid, aromatischen Polysulfonen und aromatischen Polyehterimiden ausgewählt wird, abweichend von der ersten Komponente durch die Bedingung, daß X in der ersten Komponente keine direkte Bindung oder kein Thio-Radikal sein kann, wenn das technische Hochtemperaturpolymer ein aromatisches Polyetherimid ist, wobei die obenerwähnten Prozentzahlen auf dem Gesamtgewicht der zwei Komponenten beruhen oder wahlweise zusammen mit einem oder mehrerern Feststoffschmiermitteln, Verstärkungsmaterial bzw. gewöhnlichen Zusatzstoffen genommen werden.

2. Zusammensetzung aus Polyimidharz nach Anspruch 1, wobei R:

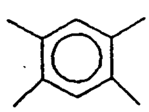 , 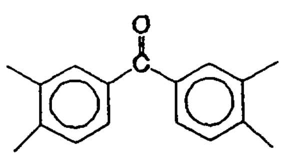 , 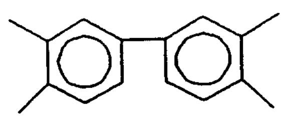 or 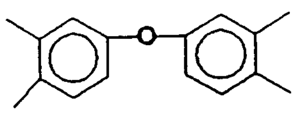

ist.

3. Zusammensetzung aus Polyimidharz nach Anspruch 1 oder Anspruch 2, wobei das technische Hochtemperaturpolymer Polyphenylensulfid ist.

4. Zusammensetzung aus Polyimidharz nach Anspruch 1 oder Anspruch 2, wobei das technische Hochtemperaturpolymer ein aromatisches Polysulfon ist.

5. Zusammensetzung aus Polyimidharz nach Anspruch 1 oder Anspruch 2, wobei das technische Hochtemperaturpolymer ein von der ersten Komponente abweichendes aromatisches Polyetherimid ist.

## Revendications

1. Composition de résine de polyimide comprenant comme premier constituant 99,9 à 50 % en poids d'un polyimide constitué essentiellement de motifs répétitifs de formule :

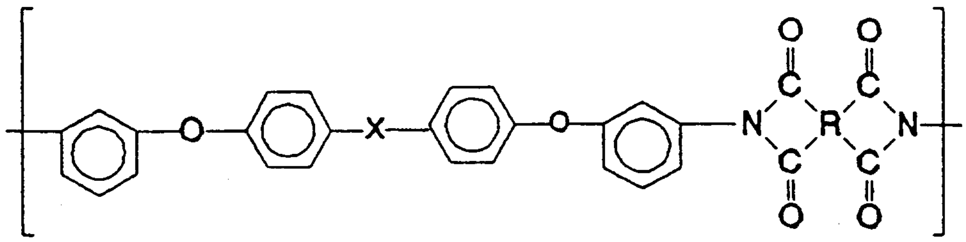

dans laquelle X est une liaison directe, un radical thio ou un radical phénylènedicarbonyle dont les deux radicaux carbonyle sont situés sur les positions méta ou para, et R est un radical tétravalent choisi parmi les radicaux aliphatiques ayant au moins 2 atomes de carbone, les radicaux alicycliques, les radicaux aromatiques mono-cycliques, les radicaux aromatiques polycycliques condensés, ainsi que les radicaux aromatiques polycycliques dont les noyaux aromatiques sont liés les uns aux autres par une liaison directe ou par un groupe pontant,

et comme deuxième constituant de 0,1 à 50 % en poids d'un polymère technique à haute température choisi parmi le poly(sulfure de phénylène), les polysulfones aromatiques et les polyétherimides aromatiques différents du premier constituant, du moment que, quand le polymère technique à haute température est un polyétherimide aromatique, le radical X du premier constituant ne peut être une liaison directe ou un radical thio, les pourcentages ci-dessus étant rapportés au poids total des deux constituants ou encore de ses deux derniers avec éventuellement un ou plusieurs lubrifiants solides, matériaux de renforcement et/ou additifs usuels.

**2.** Composition de résine de polyimide selon la revendication 1, dans laquelle R est :

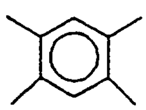 , 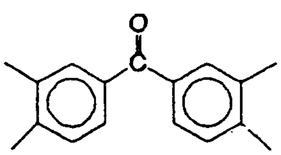 , 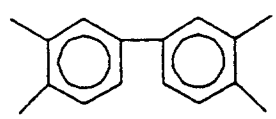 or 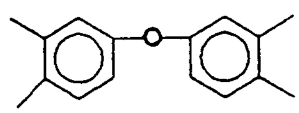

**3.** Composition de résine de polyimide selon la revendication 1 ou 2, dans laquelle le polymère technique à haute température est un poly(sulfure de phénylène).

**4.** Composition de résine de polyimide selon la revendication 1 ou 2, dans laquelle le polymère technique à haute température est une polysulfone aromatique.

**5.** Composition de résine de polyimide selon la revendication 1 ou 2, dans laquelle le polymère technique à haute température est un polyétherimide aromatique différent du premier constituant.